Europäisches Patentamt

European Patent Office

Office européen des brevets

(11) Publication number: **0 419 672 A1**

# EUROPEAN PATENT APPLICATION
## published in accordance with Art. 158(3) EPC

(21) Application number: 90903938.0

(22) Date of filing: 06.03.90

(86) International application number: PCT/JP90/00292

(87) International publication number: WO 90/11560 (04.10.90 90/23)

(51) Int. Cl.5: **G05B 19/405**

(30) Priority: 24.03.89 JP 72929/89

(43) Date of publication of application: 03.04.91 Bulletin 91/14

(84) Designated Contracting States: DE FR GB IT

(71) Applicant: FANUC LTD. 3580, Shibokusa Aza-Komanba, Oshino-mura Minamitsuru-gun, Yamanashi 401-05(JP)

(72) Inventor: FUJITA, Naoki, FANUC Mansion Harimoni 6-203
3537-1, Shibokusa,Oshinomura Minamitsuru-gun,Yamanashi 401-05(JP)
Inventor: MATSUMURA, Teruyuki 38-8, Matsugaya Hachioji-shi Tokyo 192-03(JP)
Inventor: MURATA, Koichi 1-3-32-504, Nikkocho Fuchu-shi Tokyo 183(JP)

(74) Representative: Brunner, Michael John et al GILL JENNINGS & EVERY 53-64 Chancery Lane London WC2A 1HN(GB)

(54) METHOD OF PLOTTING TOOL SHAPE.

(57) This invention relates to a method of plotting tool shape for a numerical control device (CNC) that plots a tool shape on a display screen to perform machining simulation. By inputting the tool shape data (2) including the data (2c) on the edge radius of a tool, the user plots a tool shape (3) showing the tool edge part using the arc of the tool edge radius based on the tool shape data (2). Since the tool shape (3), whose edge part has the arc of the same tool edge radius as that of an actual tool, is plotted and machining simulation is executed, an accurate plotting can be displayed.

Fig. 1

## TOOL CONFIGURATION DRAWING SYSTEM

### TECHNICAL FIELD

The present invention relates to a tool configuration drawing system of a numerical control apparatus by which a tool configuration is drawn on a display for a machining simulation, and more specifically, to a tool configuration drawing system by which an accuracy of the machining simulation is improved.

### BACKGROUND ART

Numerical control apparatuses (CNC) are provided with an animation drawing function for checking a machining state. For example, a workpiece configuration is drawn on a base screen and a tool configuration is drawn on a window screen, the window screen is scrolled, and a portion of the workpiece configuration on the base screen which overlaps the window screen is deleted in response to an NC command, to thereby simulate a cutting condition.

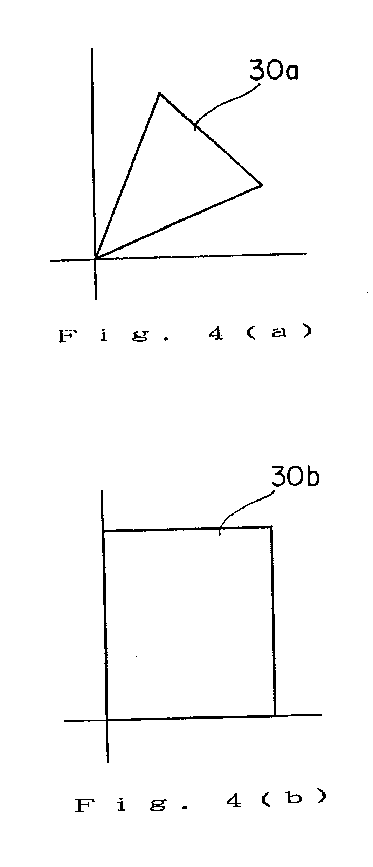

The tool configuration is drawn on the window screen as a triangular or quadrilateral shape, as shown in Figure 4(a) as a general purpose chip configuration 30a or in Figure 4(b) as a groove cutting chip configuration 30b.

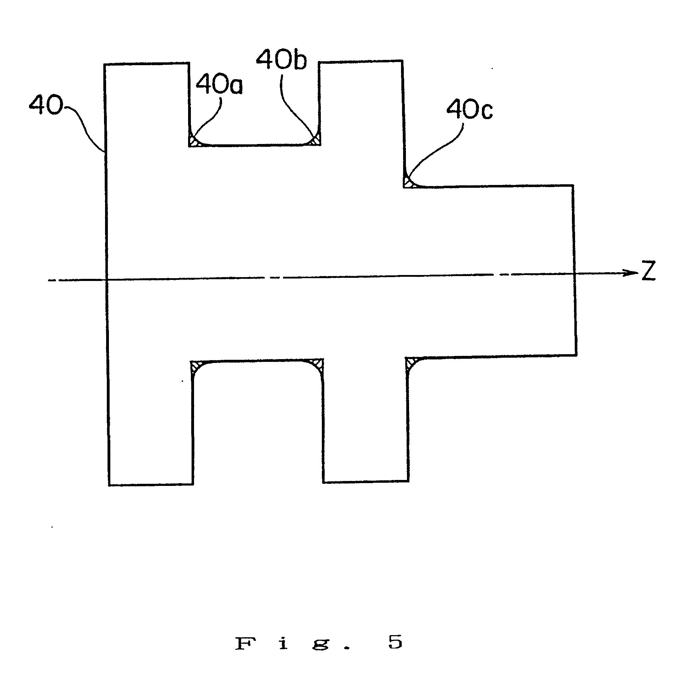

The tip of an actual tool, however, has a particular tip radius, which is usually very small, and thus an uncut portion remains at the corner of a workpiece. Figure 5 shows such a corner, wherein the workpiece 40 has been cut with a general purpose chip or a groove cutting chip, and uncut portions 40a, 40b, and 40c remain at the respective corners thereof.

Since the radius of the tool chip is not taken into consideration in the machining simulation, the uncut portions 40a to 40c are deleted in the same way as the cut portions, and thus the operator cannot obtain an accurate knowledge of the actual machining configuration.

### DISCLOSURE OF THE INVENTION

Taking the above into consideration, an object of the present invention is to provide a tool configuration drawing system by which an accuracy of a machining simulation is improved.

To solve the above problem, according to the present invention, there is provided a tool configuration drawing system of a numerical control apparatus (CNC) for drawing a tool configuration on a display to thereby carry out a machining simulation, which comprises the steps of inputting tool configuration data including data of the tip radius of a tool, and drawing a tool configuration having a tool tip represented by the arc of the tip radius, based on the tool configuration data.

The configuration of the tool is drawn such that, in the execution of the simulation, the chip thereof has the same arc as the radius of an actual tool.

### BRIEF DESCRIPTION OF THE DRAWINGS

Figure 1 is a conceptual diagram of a tool configuration drawing system according to the present invention;

Figure 2(a) shows the configuration of a general purpose chip drawn by a tool configuration drawing system according to an embodiment of the present invention;

Figure 2(b) shows the configuration of a groove cutting chip drawn by a tool configuration drawing system according to an embodiment of the present invention;

Figure 3 shows a general arrangement of hardware of a numerical control apparatus embodying the present invention;

Figure 4(a) shows the configuration of a general purpose chip drawn by a conventional drawing system;

Figure 4(b) shows the configuration of a groove cutting chip drawn by a conventional drawing system; and

Figure 5 is a diagram showing the portions of a workpiece not cut during a machining operation.

### BEST MODE OF CARRYING OUT THE INVENTION

An embodiment of the present invention will be described below with reference to the drawings.

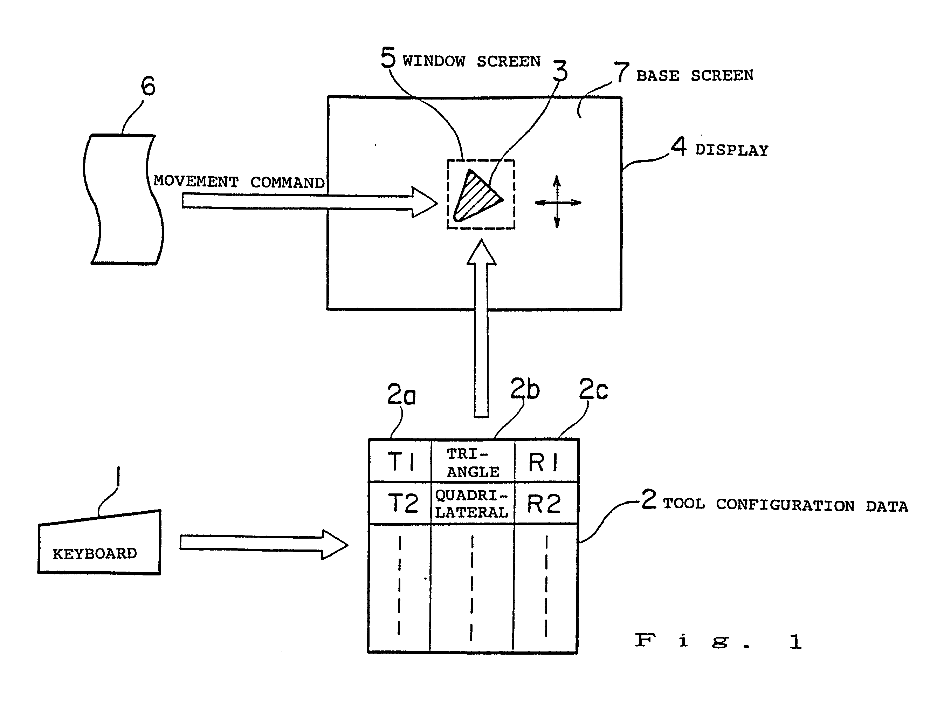

Figure 1 is a conceptual diagram of a tool configuration drawing system according to the present invention, wherein the tool numbers 2a, the outside configurations of the tools 2b, and the tip radius of the tools 2c are input through a keyboard 1 and registered as tool configuration data 2. Accordingly, when an operator selects a required tool number, the corresponding data in the tool configuration data 2 are read out, and a tool configuration 3 is drawn on a window screen 5 of a display 4.

Thereafter, the window screen 5 is scrolled in response to a tool movement command from an NC program 6, and a portion of a not shown workpiece on a base screen 7 which overlaps the window screen 5 is deleted to thereby simulate a cutting condition.

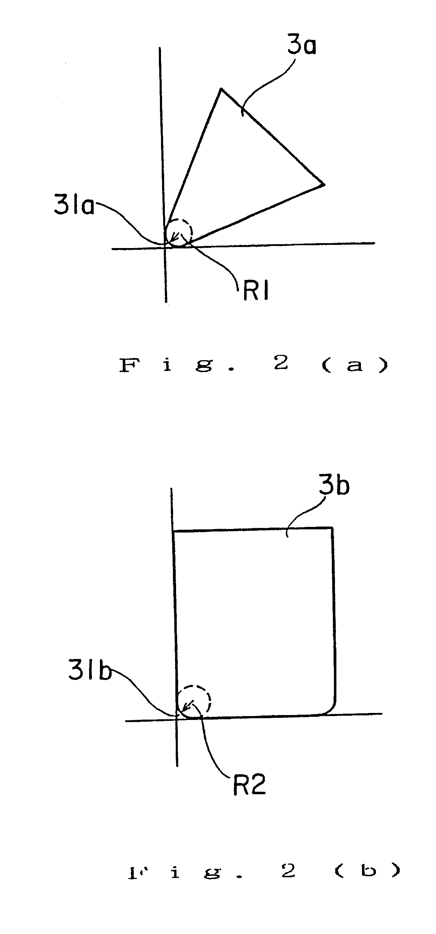

Figure 2(a) shows the configuration of a general purpose chip drawn by a tool configuration drawing system according to the embodiment of the present invention, wherein the tip 31a of a general chip configuration 3a has the same arc as that of an actual general purpose chip having a tip radius R1.

Similarly, Figure 2(b) shows the configuration of a groove cutting chip drawn by the tool configuration drawing system according to the embodiment of the present invention, wherein the tip 31b of a groove cutting chip configuration 3b has the same arc as that of an actual groove cutting chip having a tip radius R2. With this arrangement, uncut portions and the like caused by the tip configuration of the tools can be accurately checked by the machining simulation.

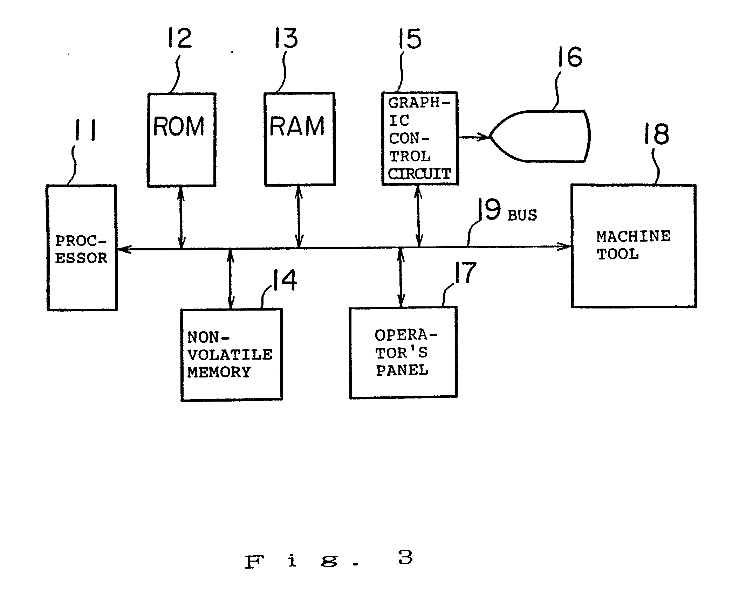

Figure 3 shows a general arrangement of hardware of a numerical control apparatus embodying the present invention, wherein a processor 11 controls the numerical control apparatus as a whole in accordance with a system program stored in a ROM 12, which is an EPROM or EEPROM. A RAM 13 is composed of a DRAM or the like, in which various data or I/O signals are stored, and a nonvolatile memory 14 is composed of a CMOS which stores parameters, amounts of pitch error correction, tool configuration data, and the like, which must be maintained operative even after a power supplied is cut off, and thus supplied with a backup power source such as a battery.

A graphic control circuit 15 converts digital signals into signals for display, and supplies these signals to a display 16. A CRT or liquid crystal display is used as the display 16, to display the position of each axis, the state of I/O signals, parameters, and the like, as well as draw workpiece configurations and tool configurations, in an animated state. An operator's panel 17 composed of a keyboard or the like is used to input various data such as the tool configuration data and the like, and to operate a machine tool 18. These components are interconnected through a bus 19.

Note that components such as an axes control circuit, servo amplifiers, spindle amplifiers, PMC (programmable machine controller) and the like are not shown in the figure. Further, a plurality of processors can be used to provide a multi-processor system, if required.

As described above, according to the present invention, since the configuration of a tool having an arc radius which is the same as that of an actual tool is drawn, uncut portions and the like of a workpiece caused by the tip configuration of the tool can be confirmed on a display by a machining simulation, whereby an NC program can be easily checked.

## Claims

1. A tool configuration drawing system of a numerical control apparatus (CNC) for drawing a tool configuration on a display to carry out a machining simulation, comprising the steps of:
   inputting tool configuration data including data of the tip radius of a tool; and
   drawing a tool configuration having a tool tip represented by the arc of said tip radius based on said tool configuration data.

2. A tool configuration drawing system according to claim 1, wherein said tool configuration is drawn and said tool configuration is moved on said display in response to an NC command.

Fig. 1

EP 0 419 672 A1

F i g . 2 ( a )

F i g . 2 ( b )

5

F i g . 3

Fig. 4 (a)

Fig. 4 (b)

Fig. 5

# INTERNATIONAL SEARCH REPORT

International Application No PCT/JP90/00292

**I. CLASSIFICATION OF SUBJECT MATTER** (if several classification symbols apply, indicate all) [6]

According to International Patent Classification (IPC) or to both National Classification and IPC

Int. Cl$^5$    G05B19/405

**II. FIELDS SEARCHED**

| Minimum Documentation Searched [7] | |
|---|---|
| Classification System | Classification Symbols |
| IPC | G05B19/405 |

Documentation Searched other than Minimum Documentation
to the Extent that such Documents are Included in the Fields Searched [8]

| | |
|---|---|
| Jitsuyo Shinan Koho | 1932 – 1990 |
| Kokai Jitsuyo Shinan Koho | 1971 – 1990 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 63-204412 (Fanuc Ltd.),<br>24 August 1988 (24. 08. 88),<br>(Family: none) | 1 – 2 |
| Y | JP, A, 59-17607 (Fanuc Ltd.),<br>28 January 1984 (28. 01. 84),<br>(Family: none) | 1 – 2 |
| Y | JP, A, 61-257740 (Fanuc Ltd.),<br>15 November 1986 (15. 11. 86),<br>Fig. 2 (Family: none) | 1 – 2 |
| Y | JP, A, 62-217311 (Hitachi Seiki K.K.),<br>24 September 1987 (24. 09. 87),<br>(Family: none) | 1 – 2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 29, 1990 (29. 05. 90) | June 11, 1990 (11. 06. 90) |
| International Searching Authority | Signature of Authorized Officer |
| Japanese Patent Office | |

Form PCT/ISA/210 (second sheet) (January 1985)